# EUROPEAN PATENT APPLICATION

(11) **EP 0 556 986 A1**
(43) Date of publication of application: **25.08.1993**
(21) Application number: 93300840.1
(22) Date of filing: 04.02.1993
(51) Int. Cl.: C04B 35/56

(54) **Silicon carbide members for semiconductor processing, their manufacture and use**

(30) Priority: 04.02.1992 JP 47841/92; 24.09.1992 JP 279517/92
(71) Applicant: Shin-Etsu Chemical Co., Ltd., Chiyoda-ku Tokyo 100 (JP)
(72) Inventor: Matsumoto, Fukuji, Takefu-shi, Fukui-ken (JP); Tajima, Shigenobu, Kiyose-shi, Tokyo (JP); Kobayashi, Yukio, Fukui-shi, Fukui-ken (JP); Kohno, Osamu, Takefu-shi, Fukui-ken (JP)
(74) Representative: Stoner, Gerard Patrick

(57) **Abstract**

A silicon carbide member for use in the heat treatment of semiconductor wafers is prepared by molding a mixture of silicon carbide powder, carbon powder, and a binder, calcining the molded body, and reaction sintering the calcined body with metallic silicon. At least a surface of the molded or calcined body is treated with a carbonizable substance prior to reaction sintering. The silicon carbide member minimizes diffusion movement of metal impurities such as iron through the member and is thus effective for preventing contamination of semiconductor wafers.

## Description

This invention relates to a silicon carbide member for use in the manufacture of semiconductor, especially for heat treatment of semiconductor. More particularly, it relates to a silicon carbide member which restrains diffusion movement of impurities therethrough for minimizing contamination of semiconductor articles e.g. silicon wafers.

### Prior Art

Silicon carbide has good density, heat resistance and rigidity and is often used in the step of heat treating semiconductors. Commonly available silicon carbide members include soaking tubes or liner tubes having a constant temperature distribution, reaction tubes or process tubes for reaction gas flow, and jigs or wafer boards for supporting semiconductor wafers. These silicon carbide members are typically prepared by reaction sintering and recrystallization techniques which generally involve adding a binder to source powder, molding the powder, firing and sintering.

Silicon carbide members have the drawback that metallic impurities diffuse and move through the members and leave the members during high - temperature heat treatment, causing semiconductor wafers to be contaminated. This can introduce defects into semiconductor devices, resulting in low yields of manufacture.

In order to restrain diffusion movement of metallic impurities from the silicon carbide members, an attempt was made to form a high purity, high density silicon carbide coating on the member surface by chemical vapor deposition (CVD) treatment.

However, wafer properties can vary widely even when silicon carbide members used are highly purified, e.g. with impurity (e.g. Fe) content as low as several ppm or less. For example, the wafer lifetime can vary from several µ sec. to several ten µ sec. when wafers are treated under the same conditions. The use of CVD treatment is limited from an economical aspect since the CVD treatment needs a large capital investment for its installation and imposes an increased production cost. In addition, the CVD treatment still allows escape of some metallic impurities, and the CVD coating can strip from the underlying material or form cracks and pinholes due to acute thermal cycling. For these reasons, the CVD treatment is generally regarded as failing to achieve the desired purpose of fully restraining contamination of semiconductor wafers in a practical way.

The general problem addressed herein is to provide new silicon carbide members having a low tendency to contaminate semiconductor articles contacted therewith. Other aspects are to provide new methods of making silicon carbide members, and the use of such silicon carbide members in semiconductor processing.

The present invention is directed to a silicon carbide member for use in the manufacture of semiconductor which is obtained by molding a mixture comprising silicon carbide powder, carbon powder, and a binder, calcining the molded body, and reaction sintering the calcined body with metallic silicon. According to a first aspect of the present invention, at least a surface of the molded or calcined body is treated with a substance which carbonizes through pyrolysis (referred to hereinafter simply as "carbonizable substance"). When the calcined body with the carbonizable substance present at least on its surface is reaction sintered with metallic silicon, the compositional ratio of silicon carbide at least at the surface of the silicon carbide member is increased at the same time as sintering of the member. Differently stated, the concentration of metallic silicon at least on the surface is reduced so that movement of impurities through the member is restrained. We have found that this can improve the properties of wafers to be treated in or on the member. By avoiding the use of CVD treatment, the member can be manufactured at a practical cost.

In one embodiment, the molded or calcined body is dipped in a dispersion of a carbonizable substance for impregnating the body with the solution, thereby treating the body entirely with the carbonizable substance. In another embodiment, the solution is applied to a surface of the molded or calcined body by coating, thereby treating only the surface of the body with the carbonizable substance. When the thus treated body is reaction sintered with metallic silicon, a layer having a.higher content of silicon carbide (consolidated silicon carbide layer) is formed at the surface of the silicon carbide member. This layer is high in purity and density and, we find, effective in preventing migration of metallic impurities from the member through diffusion. The layer is firmly joined and integrated to the member, substantially free from stripping, cracks and pinholes, as opposed to the CVD coatings. Thus the silicon carbide member with such a layer can reduce contamination of semiconductor wafers.

The surface consolidated silicon carbide layer exerts the blocking effect of restraining diffusion movement of metallic impurities such as iron. When only a surface portion is treated with the carbonizable substance, there is obtained a silicon carbide member having a surface portion consisting of a high purity, high density silicon carbide layer and a core consisting of silicon carbide and metallic silicon. Some metallic impurity concentration gradient is created in the metallic siliconcontaining core of this silicon carbide member since diffusion movement of metallic impurities in metallic silicon is faster by a factor of from 10⁸ to 10¹⁰ (in terms of diffusion coefficient) than in silicon carbide. Even in the presence of such a metallic impurity concentration gradient, the consolidated silicon carbide layer having a higher silicon carbide content and forming the surface layer is effective in preventing diffusion movement of metallic impurities out of the member, and so can inhibit contamination of semiconductor wafers.

According to a second aspect of the present invention, the silicon carbide member contains 5 to 13% by weight of metallic silicon, a lower content within this range being preferred, and has a porosity of up to 0.5%. This is also effective in stabilizing the properties of semiconductor wafers to be treated in or on the member.

### DETAILED DESCRIPTION

According to the first aspect of the present invention, a silicon carbide member for use in the manufacture of semiconductor is obtained by molding a mixture comprising silicon carbide powder, carbon powder, and a binder, treating at least a surface of the molded body with a carbonizable substance, calcining the body, and reaction sintering the calcined body with metallic silicon, or by molding a mixture comprising silicon carbide powder, carbon powder, and a binder, calcining the molded body, treating at least a surface of the calcined body with a carbonizable substance, and reaction sintering the body with metallic silicon. The resulting silicon carbide member has a consolidated or concentrated silicon carbide layer at least on the surface thereof.

Such a silicon carbide member is prepared first by molding a mixture comprising silicon carbide powder, carbon powder, and a binder into a desired shape by means of a rubber press or the like. The molded body is then calcined in an inert atmosphere such as nitrogen gas at a temperature of at least 500°C, preferably 600 to 800°C.

According to the present invention, at least a surface portion of the molded or calcined body is treated with a carbonizable substance. More particularly, the molded or calcined body is dipped in a solution of a carbonizable substance. Alternatively, a surface portion of the body is coated or impregnated with such a solution by spraying or the like. Then the carbonizable substance is present at least on the surface of the body, i.e. throughout part or all of the body in the former embodiment and only on the surface in the latter embodiment.

The calcined body having a high concentration surface layer of the carbonizable substance formed thereon is then reaction sintered in vacuum or inert gas atmosphere at a temperature of 1500°C or higher, preferably 1500 to 1600°C by impregnating it with metallic silicon. This reaction sintering causes both the source carbon powder available in the calcined body and carbon resulting from carbonization by pyrolysis to react with metallic silicon to newly form silicon carbide. The skilled person will know how to perform this sintering with metallic silicon. There is formed a silicon carbide member having a consolidated silicon carbide layer on the surface. This surface layer generally has a SiC/Si composition containing at least 90% by weight of SiC, especially 90 to 95% by weight of SiC and 5 to 10% by weight of Si although the compositional ratio of the surface layer is not limited thereto.

The silicon carbide and carbon powders used herein may be as commonly used in the manufacture of silicon carbide members,although higher purity is desirable. Suitable binders include methyl cellulose, phenolic resins, silicone resins, and styrene resins. These materials may be blended in any desired ratio as commonly used for this purpose. Preferably, 65 to 85% by weight of silicon carbide, 5 to 15% by weight of carbon and 15 to 25% by weight of the binder are recommended.

The carbonizable substances used herein are generally organic substances although synthetic organic resins having a higher retention of carbon, for example, phenolic resins, furan resins, epoxy resins, and polyester resins are preferred as well as tar, pitch and paraffin. By blending not more than 10 parts of fine carbon powder (e.g. carbon black) to 100 parts (by weight) of the carbonizable substance, members having a high silicon carbide content can be obtained.

The carbonizable substances may be used as such if they are liquid. If they are solid, they may be used by heating them into liquid or by dissolving or dispersing them in water or organic solvents such as alcohols. Also, as previously described, by dipping the molded or calcined body in such a liquid or by coating or impregnating the molded or calcined body with such a liquid, the carbonizable substance can be incorporated throughout or in proximity to the surface of the body. Treatment of the molded or calcined body on the surface with the carbonizable substance may be repeated because a surface layer having a higher silicon carbide content can be formed as the number of treatments is increased. In this regard, after every surface treatment, the carbonizable substance may be heat treated in an inert gas atmosphere for pyrolysis. For better results, the sequence of surface treatment and pyrolysis is repeated plural times.

The second aspect of the present invention is to reduce the metallic silicon content of an entire silicon carbide member for use in the manufacture of semiconductor. The silicon carbide member is also prepared by molding a mixture comprising silicon carbide powder, carbon powder, and a binder, calcining the molded body, and reaction sintering the calcined body with metallic silicon. The member contains 5 to 13% by weight, preferably 5 to 10% by weight of metallic silicon and has a porosity of up to 0.5%.

It is preferred to reduce the metallic silicon content of a silicon carbide member as low as possible. Nevertheless, if the metallic silicon content is below 5% by weight, impregnation with silicon during the sintering step is reduced, tending to give a sintered body having more than 0.5% of voids and cracks. Since voids can contribute to contamination, members having more than 0.5% of voids can deteriorate the properties of semiconductor wafers to be treated therein.

The silicon carbide member of such a composition is preferably prepared by blending 55 to 80%, especially 60 to 70% by weight of silicon carbide powder, 10 to 27%, especially 15 to 20% by weight of carbon powder, and 10 to 30%, especially 10 to 20% by weight of binder, Alternatively, the silicon carbide member can be prepared by impregnating a molded or calcined body with a solution containing a carbonizable substance to increase the silicon carbide ratio as in the first embodiment.

A further aspect of the invention is a method of making a silicon carbide member, as described above.

A further aspect is the use of a silicon carbide member as described in semiconductor processing, in contact with a semiconductor article.

### EXAMPLE

Examples of the present invention are given below by way of illustration and not by way of limitation.

### Example 1

SiC and carbon powders used in this example were commercially available ones. 77% by weight of SiC powder, 5% by weight of carbon powder, and 18% by weight of silicone resin as a binder were blended. The mixture was molded and then calcined in a calcining furnace by heating at 700°C in a nitrogen gas atmosphere. The calcined body was dipped in a methanol solution of 30% by weight phenolic resin for one hour to have the body impregnated with 6% by weight of phenolic resin and then dried for 24 hours at room temperature. The body was placed in a sintering furnace where it was heated at 1,600°C while impregnating it with metallic silicon, completing reaction sintering. In this way, there was obtained a reaction tube having an outer diameter of 165 mm, an inner diameter of 150 mm and a length of 2,600 mm.

### Example 2

SiC and carbon powders used in this example were commercially available ones. 72% by weight of SiC powder, 10% by weight of carbon powder, and 18% by weight of silicone resin as a binder were blended. The mixture was molded and then calcined in a calcining furnace by heating at 700°C in a nitrogen gas atmosphere. The calcined body was placed in a sintering furnace where it was heated at 1,600°C while impregnating it with metallic silicon, completing sintering. In this way, there was obtained a reaction tube having an outer diameter of 165 mm, an inner diameter of 150 mm and a length of 2,600 mm. A sample was cut from the end of the reaction tube and measured for silicon content and voids, finding a silicon content of 13% by weight and a porosity of 0.5%. The percent porosity was the sample weight divided by true specific gravity.

### Comparative Example 1

SiC and carbon powders used in this example were commercially available ones. 62% by weight of SiC powder, 20% by weight of carbon powder, and 18% by weight of silicone resin as a binder were blended. The mixture was molded and then calcined in a calcining furnace by heating at 700°C in a nitrogen gas atmosphere. The calcined body was placed in a sintering furnace where it was heated at 1,600°C while impregnating it with metallic silicon, completing sintering. In this way, there was obtained a reaction tube having an outer diameter of 165 mm, an inner diameter of 150 mm and a length of 2,600 mm. A sample was cut from the end of the reaction tube and measured for silicon content and voids, finding a silicon content of 4% by weight and a porosity of 3.2%

### Comparative Example 2

SiC and carbon powders used in this example were commercially available ones. 77% by weight of SiC powder, 5% by weight of carbon powder, and 18% by weight of silicone resin as a binder were blended. The mixture was molded and then calcined in a calcining furnace by heating at 700°C in a nitrogen gas atmosphere. The calcined body was placed in a sintering furnace where it was heated at 1,600°C while impregnating it with metallic silicon, completing sintering. In this way, there was obtained a reaction tube having an outer diameter of 165 mm, an inner diameter of 150 mm and a length of 2,600 mm. A sample was cut from the end of the reaction tube and measured for silicon content and voids, finding a silicon content of 21% by weight and a porosity of 0.4%.

A silicon wafer (CZ - P type <111>) was set in each of the reaction tubes prepared in Examples 1 - 2 and Comparative Examples 1 - 2, which was placed in a diffusion furnace where the wafer was heat treated at 1,150°C for 4 minutes in dry oxygen. The lifetime of the wafer was measured for examining the degree of wafer contamination. It is to be understood that the longer the wafer lifetime, the lesser the contamination is. The results are shown in Table 1.

**Table 1**

| Sample | Silicon content (%) | Porosity (%) | Lifetime (µ sec.) |
|---|---|---|---|
| Example 1 | - | - | 65.4 |
| Example 2 | 13 | 0.5 | 63.7 |
| Comparative Example 1 | 4 | 3.2 | 12.3 |
| Comparative Example 2 | 21 | 0.4 | 18.5 |

### Example 3

Silicone carbide and carbon powders used in this example were obtained by purifying commercially available ones. 80% by weight of silicon carbide powder, 10% by weight of carbon powder, and 10% by weight of silicone resin as a binder were blended. The mixture was granulated, molded into a hollow cylindrical shape and then calcined by heating at 800°C in a nitrogen gas atmosphere. The calcined cylinder was coated on the inner surface with a resol type phenolic resin in liquid form once in a coating weight of 0.05 g/cm² and dried for 12 hours at room temperature. The cylinder was heated at 1,500°C in vacuum while impregnating it with high purity metallic silicon, completing reaction sintering. In this way, there was obtained a reaction tube having an outer diameter of 165 mm, an inner diameter of 150 mm and a length of 2,600 mm.

### Example 4

Silicon carbide and carbon powders used in this example were obtained by purifying commercially available ones. 70% by weight of silicon carbide powder, 16% by weight of carbon powder, and 14% by weight of silicone resin as a binder were blended. The mixture was granulated, molded into a hollow cylindrical shape and then calcined by heating at 800°C in a nitrogen gas atmosphere. The calcined cylinder was coated on both the inner and outer surfaces with a mixture of a resol type phenolic resin in liquid form and carbon black powder in a weight ratio of 100:1 once in a coating weight of 0.05 g/cm² and dried for 12 hours at room temperature. The cylinder was heated at 1,600°C in vacuum while impregnating it with high purity metallic silicon, completing reaction sintering. In this way, there was obtained a reaction tube having an outer diameter of 165 mm, an inner diameter of 150 mm and a length of 2,600 mm.

### Comparative Example 3

Silicon carbide and carbon powders used in this example were obtained by purifying commercially available ones. 80% by weight of silicon carbide powder, 5% by weight of carbon powder, and 15% by weight of silicone resin as a binder were blended. The mixture was granulated, molded into a hollow cylindrical shape and then calcined by heating at 800°C in a nitrogen gas atmosphere. The calcined cylinder was heated at 1,500°C in vacuum while impregnating it with high purity metallic silicon, completing reaction sintering. In this way, there was obtained a reaction tube having an outer diameter of 165 mm, an inner diameter of 150 mm and a length of 2,600 mm. This reaction tube had a metallic silicon content of 18% by weight and a porosity of 0.4%.

The reaction tubes prepared in Examples 3 - 4 and Comparative Example 3 were subjected to a thermal cycling test by placing them in a diffusion furnace where they were heated in air to 1,250°C at a rate of 20°C /min., maintained at 1,250°C for 30 minutes, and then cooled to 800°C at a rate of 15°C. This rapid thermal cycling was repeated 10 times. All the reaction tubes withstood the rapid thermal cycling since no cracks or stripping occurred in these reaction tubes at the end of the test.

For examining how silicon wafers were contaminated with impurities diffusing from the reaction tube during heat treatment, the reaction tubes prepared in Examples 3 - 4 and Comparative Example 3 were placed in a diffusion furnace where silicon wafers were subjected to thermal oxidation. The lifetime of the silicon wafers was measured. The results are shown in Table 2.

**Table 2**

| Sample | Treatment of cylindrical reaction tube | Lifetime (µ sec.) |
|---|---|---|
| Example 3 | inner surface | 110.7 |
| Example 4 | inner and outer surfaces | 163.3 |
| Comparative Example 3 | none | 57.6 |

As is evident from Table 2, a silicon carbide reaction tube resulting from a cylindrical tube having a consolidated silicon carbide layer formed at least on the inner surface thereof has a long lifetime and is of high quality. The advantages associated with formation of a consolidated silicon carbide layer are shown.

The silicon carbide member for use in the semiconductor manufacture according to the present invention is effective for minimizing diffusion movement of metal impurities such as iron through the member for preventing contamination of semiconductor wafers as much as possible.

Although some preferred embodiments have been described, many modifications and variations may be made thereto in the light of the above teachings. It is therefore to be understood that within the scope of the appended claims, the invention may be practiced otherwise than as specifically described.

## Claims

1. A silicon carbide member for use in the manufacture of semiconductor which is obtained by molding a mixture comprising silicon carbide powder, carbon powder, and a binder, calcining the molded body, and reaction sintering the calcined body with metallic silicon, characterized in that
at least a surface of said molded or calcined body is treated with a substance which carbonizes through pyrolysis.

2. A silicon carbide member for use in the manufacture of semiconductor which is obtained by molding a mixture comprising silicon carbide powder, carbon powder, and a binder, calcining the molded body, and reaction sintering the calcined body with metallic silicon, characterized in that
said member contains 5 to 13% by weight of metallic silicon and has a porosity of up to 0.5%.

3. A method of making a silicon carbide member according to claim 1 or claim 2.
